**Europäisches Patentamt**

**European Patent Office**

**Office européen des brevets**

(19)

(11) Veröffentlichungsnummer : **0 408 932 B1**

(12)

# EUROPÄISCHE PATENTSCHRIFT

(45) Veröffentlichungstag der Patentschrift :
**04.11.92 Patentblatt 92/45**

(51) Int. Cl.$^5$ : **B60N 2/08**

(21) Anmeldenummer : **90112015.4**

(22) Anmeldetag : **25.06.90**

(54) **Festellvorrichtung für einen einstellbaren Fahrzeugsitz.**

(30) Priorität : **15.07.89 DE 3923443**

(43) Veröffentlichungstag der Anmeldung :
**23.01.91 Patentblatt 91/04**

(45) Bekanntmachung des Hinweises auf die
Patenterteilung :
**04.11.92 Patentblatt 92/45**

(84) Benannte Vertragsstaaten :
**DE ES FR GB IT SE**

(56) Entgegenhaltungen :
**EP-A- 0 180 422**
**WO-A-86/00857**
**DE-C- 2 729 770**
**FR-A- 2 385 928**
**US-A- 4 712 759**

(73) Patentinhaber : **C. Rob. Hammerstein GmbH**
**Postfach 13 01 18 Merscheiderstrasse 167**
**W-5650 Solingen 13 (DE)**

(72) Erfinder : **Bauer, Heinz**
**Hammerstrasse 9**
**W-5650 Solingen 11 (DE)**
Erfinder : **Becker, Burckhard, Dipl.-Ing.**
**Obenkatternberg 25**
**W-5650 Solingen 11 (DE)**
Erfinder : **Frohnhaus, Ernst-Reiner, Dipl.-Ing.**
**Hammerstrasse 13 5**
**W-5650 Solingen 11 (DE)**
Erfinder : **Köppen, Rudolf**
**Karl-Kämpf-Allee 17**
**W-4050 Mönchengladbach (DE)**

(74) Vertreter : **Bauer, Wulf, Dr.**
**Wolfgang-Müller-Strasse 12**
**W-5000 Köln 51 (Marienburg) (DE)**

EP 0 408 932 B1

## Beschreibung

Die Erfindung bezieht sich auf eine Feststellvorrichtung für einen einstellbaren Fahrzeugsitz nach dem Oberbegriff des Patentanspruchs 1.

Bei dieser, aus der DE-C-2 729 770 vorbekannten Feststellvorrichtung greift zwangsläufig mindestens ein Sperrzahn in eine Rastöffnung ein, wenn die gemeinsame Ausrastvorrichtung der beiden Sperrzähne freigegeben wird. Hierdurch wird eine Sicherheitsarretierung erreicht. Ein Zustand, bei dem die beiden Sperrzähne lediglich auf den Rasten aufliegen und erst dann eingreifen, wenn eine Relativbewegung zwischen Sperrzähnen und der Rastenschiene stattfindet, kann nicht auftreten.

Nachteilig bei der vorbekannten Feststellvorrichtung ist jedoch, daß sie bei Loslassen der Ausrastvorrichtung nicht zwangsläufig den Fahrzeugsitz in Einstellrichtung blockiert, vielmehr bleibt im allgemeinen neben dem einen der beiden Sperrzähne, der in eine Rastöffnung eingreift, Spiel und wird eine vollständige Blockierung erst erreicht, wenn auch der zweite Sperrzahn eingegriffen hat. Hierfür ist jedoch eine Relativbewegung zwischen den für die Feststellvorrichtung zu arretierenden Teilen unumgänglich. Im praktischen Betrieb hat dies erläutert am Beispiel eines Fahrzeugschiebesitzes die folgenden Konsequenzen: Wird der Fahrzeugschiebesitz nach Betätigen der gemeinsamen Ausrastvorrichtung der beiden Sperrzähne in eine neue Position verschoben, so rastet nach Freigabe der Ausrastvorrichtung im allgemeinen nur einer der beiden Sperrzähne ein, wodurch zwar eine auch unfallbedingte Beschleunigungen aufnehmende Vorraststellung erreicht wird, der Fahrzeugschiebesitz aber noch in einem begrenzten Maß verschiebbar ist. Findet nun eine Verschiebebewegung des Fahrzeugschiebesitzes in die Richtung statt, in der der zweite, noch nicht eingerastete Sperrzahn eingreifen kann, so kommt es zur vollständigen Rastposition, eine limitierte Verschiebbewegung des Fahrzeugschiebesitzes ist dann nicht mehr möglich. Das im allgemeinen später stattfindende Einrasten des zweiten Sperrzahns verbunden mit der hierzu notwendigen Verschiebung des Fahrzeugschiebesitzes wird als nachteilig empfunden.

Ein weiterer Nachteil der vorbekannten Feststellvorrichtung liegt auch darin, daß die Arretierung des Fahrzeugsitzes im allgemeinen nicht in der Position erfolgt, in der die Ausrastvorrichtung freigegeben wird. Die endgültige Arretierung erfolgt zwar in unmittelbarer Nähe dieser Position, jedoch kann unter Umständen ein Verschiebeweg von mehreren Millimetern zwischen der gewünschten und der tatsächlichen Position der Arretierung vorliegen.

Die EP-A-0 180 422 beschreibt eine Feststellvorrichtung mit einer Hauptarretierung für das erste Schienenpaar und einer Folgearretierung für das zweite Schienenpaar. Sie geht davon aus, daß zwischen den Positionen der beiden Schienenpaare praktisch immer ein Versatz besteht. In einer Position, in der die Hauptarretierung einrasten kann, ist aufgrund des Versatzes für die Folgearretierung ein Einrasten im allgemeinen nicht möglich. Die Folgearretierung hat Sperrzähne mit Zahnflanken, die im vorderen Bereich schräg verlaufen. Weiterhin sind die Sperrzähne in Verschieberichtung des Fahrzeugsitzes elastisch bewegbar. Dadurch rutschen die Sperrzähne der Folgearretierung entlang des schräg verlaufenden Teils ihrer Zahnflanke in die zugehörige Rastöffnung und liegen dann mit dem in Einrastrichtung verlaufenden Teil ihrer Zahnflanke an der Rastöffnung an.

Aus dem Dokument US-A-4 712 759 ist eine Feststellvorrichtung bekannt, die das für zwei Sperrzähne aus dem Dokument DE-C-2 729 770 bekannte Prinzip einer Sicherheitsarretierung mit Spiel auf mehr als zwei Sperrzähne überträgt.

Hiervon ausgehend ist es Aufgabe der Erfindung, die Feststellvorrichtung der eingangs genannten Art unter Beibehaltung ihrer Vorzüge, insbesondere der vorläufigen Sicherheitsarretierung, dahingehend weiterzuentwickeln, daß eine stufenlose Arretierung möglich ist und die Arretierung in den Moment erfolgt, in dem die Ausrastvorrichtung freigegeben wird. Diese Aufgabe wird gelöst durch die Merkmale des Patentanspruchs 1.

Der Lösung liegt das Prinzip zugrunde, schräg verlaufende Flanken für die Arretierung einzusetzen. Die Sperrzähne, die derartige, schräg verlaufende Flanken haben, werden im Sinne eines Keils soweit in vorhandene Lücken zwischen bereits eingerasteten Sperrzähnen und den Rasten eingedrückt oder kommen in eine Anlage an eine Kante einer Raste, bis eine Spielfreiheit auftritt. Die Größe des Winkels ist so gewählt, daß der Winkel einerseits möglichst groß ist, um die Breite des zugehörigen Sperrzahns bzw. die maximale Eingriffstiefe dieses Sperrzahns möglichst gering zu halten. Andererseits muß der Winkel aber ausreichend klein gewählt werden, so daß der Sperrzahn bei Belastung des Fahrzeugsitzes nicht selbsttätig aus seiner Position herausgedrückt werden kann. Die schräg verlaufenden Flanken sind gleichmäßig über ein Periodenmaß der Rasten und Rastöffnungen verteilt, dabei übernimmt jede Flanke einen bestimmten Teilbereich des Periodenmaßes. Bei nebeneinander angeordneten Sperrzähnen wird dies dadurch erreicht, daß die Sperrzähne über mindestens zwei Periodenmaße verteilt angeordnet sind, dadurch bleibt genügend Platz zwischen ihnen für eine separate Führung jedes einzelnen Sperrzahns. Werden die Sperrzähne dagegen quer zur in Einstellrichtung seitlich versetzt angeordnet, so ist es möglich, daß alle Sperrzähne ein- und dasselbe Periodenmaß treffen, also die Anordnung aller Sperrzähne nicht länger ist als das Periodenmaß.

In einer vorteilhaften Weiterbildung wird vorgeschlagen, daß die lichte Weite einer Rastöffnung der Summe aus Breite einer Raste und doppelter Breite eines Sperrzahns entspricht und der lichte Abstand zwischen den Sperrzähnen mit der Summe aus der Breite einer Raste und dem n-fachen (n = 0, 1, 2, 3 ...) Periodenmaß übereinstimmt.

In einer Weiterbildung der Erfindung wird vorgeschlagen, daß die Rastzähne zwei in unterschiedliche Richtungen weisende, schräg verlaufende Flanken haben. Hierdurch wird eine vollständig stufenfreie Arretierung erzielt.

Weiterhin wird vorgeschlagen, daß der spitze Winkel der schräg verlaufenden Flanken 5° bis 20°, vorzugsweise 7° bis 15° beträgt. Der spitze Winkel wird möglichst nahe dem Winkel gewählt, bei dem ein Sperrzahn bei unfallbedingten Belastungen des Fahrzeugsitzes gerade noch nicht aus seiner Sperrstellung herausgedrückt wird.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser zeigen:

Fig. 1 eine schnittbildlich ausgeführte, schematische Darstellung einer Rastenschiene und dreier, längsgeführter, baugleicher Sperrzähne,

Fig. 2 eine Darstellung entsprechend Fig. 1 für eine Rastenschiene, der fünf V-förmig zugespitze Sperrzähne zugeordnet sind und

Fig. 3 eine Darstellung entsprechend Fig. 1 mit einer Rastenschiene und vier in ungleichem Abstand angeordneten, baugleichen Sperrzähnen.

Die Figuren sind so ausgeführt, daß lediglich die zur Erläuterung der Erfindung wesentlichen Elemente aus ihnen hervorgehen. Zu weiteren Einzelheiten wird insbesondere auf die bereits genannte DE-C-2 729 770 verwiesen.

Die in den Figuren gezeigten Vorrichtungen sind für Verstellvorrichtungen eines einstellbaren Fahrzeugsitzes geeignet. Sie werden anhand eines Fahrzeugschiebesitzes erläutert, sind grundsätzlich aber auch geeignet für die Einstellung anderer Sitzbetätigungen, beispielsweise der Anhebung einer Sitzkante, Neigungseinstellung der Rückenlehne usw. In den Figuren ist jeweils die Ausrastposition dargestellt.

Parallel zu einer Einstellrichtung 20 verläuft eine Rastenschiene 22, die in einem Periodenmaß P angeordnete Rasten 24 und Rastöffnungen 26 aufweist. Sie ist mit einem der beiden Teile, deren Verstellung durch die Verstellvorrichtung arretiert werden soll, verbunden. Mit dem anderen dieser beiden gegeneinander einstellbaren Teile sind Führungen 28 verbunden, in denen ebenfalls diesem Teil zugeordnete Sperrzähne 30 bis 38 verschiebbar angeordnet sind. In bekannter Weise sind diese Sperrzähne in einer Einrastrichtung 40 bewegbar und durch hier nicht gezeigte, an sich bekannte Mittel elastisch in Einrastrichtung 40 vorbelastet. Durch eine hier ebenfalls nicht gezeigte, an sich bekannte Ausrastvorrichtung sind die Sperrzähne 30 bis 38 gemeinsam ausrastbar. Wie die Figuren zeigen, sind die Sperrzähne 30 bis 38 im Abstand voneinander angeordnet, der Abstand wird mit z bezeichnet. Er ist gleich der Breite b der Sperrzähne 30 bis 38. Hierdurch ergeben sich einfache und gleichmäßige Konstruktionen. Die Führungen 28 sind so ausgeführt, daß die Sperrzähne 30 im wesentlichen nur in Einrastrichtung 40 und in Gegenrichtung hierzu bewegt werden können. Sie können die bei unfallbedingten Beschleunigungen in der Feststellvorrichtung anfallenden Kräfte aufnehmen.

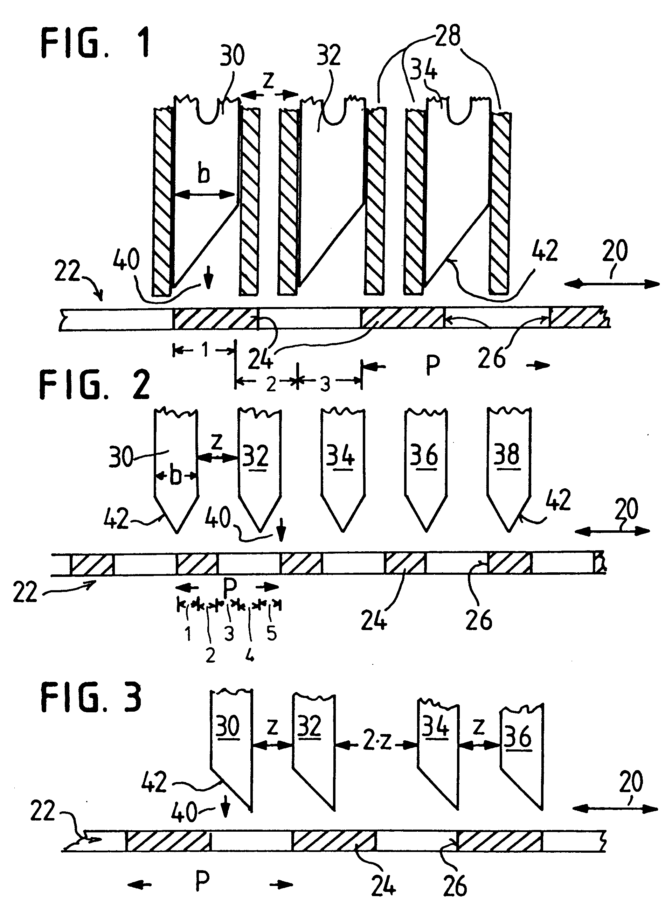

Die drei Sperrzähne 30 bis 34 in Fig. 1 haben an ihrem freien Ende eine seitliche Flanke 42, die geradlinig und in einem spitzen Winkel zur Einrastrichtung 40 verläuft. Die jeweils nur einen Flanken 42 der Sperrzähne 30 bis 36 weisen nach rechts, aufgrund der gleichgerichteten Flanken 42 ist die Feststellvorrichtung gemäß Fig. 1 im wesentlichen nur für die Arretierung in einer Richtung bestimmt, für die entgegengesetzte Einstellrichtung kann ein zweiter Satz gleichartiger Sperrzähne, jedoch mit nach links weisenden Flanken, vorgesehen werden. Insgesamt erhält man durch sechs Sperrzähne eine Feststellvorrichtung, die in der Position der verschiebbaren Teile arretiert, in der die Ausrastvorrichtung der sechs Sperrzähne freigegeben wird.

In der praktischen Ausbildung ist die Spitze der Sperrzähne unten abgerundet und sind die Sperrzähne 30 etwas breiter als die mathematisch erforderliche Breite b, um Toleranzen, die Spitzenabrundung usw. auszugleichen. Dies gilt grundsätzlich auch für die beiden anderen Ausführungsbeispiele. Gezeigt ist in den Ausführungsbeispielen jeweils nur die mathematisch exakte Lösung. In der praktischen Ausführung wird man die Sperrzähne immer etwas breiter als absolut notwendig wählen, um Sicherheit zu schaffen. Auch soll hier darauf hingewiesen werden, daß die spitzen Winkel, die die Flanken 42 mit der Einrastrichtung 40 einschließen, in den Figuren aus Darstellungsgründen größer gewählt sind als in der Praxis, in der Praxis liegen diese Winkel zwischen 5° und 20°, vorzugsweise zwischen 7° und 15°, Winkel um 14° haben sich besonders bewährt.

Anhand der drei schematisch angedeuteten Ausführungsbeispiele sollen die grundlegenden Konstruktionsprizipien erläutert werden:

1. Zunächst wird das Periodenmaß P, also die Summe der Breite einer Raste 24 und einer Rastöffnung 26 (in Einstellrichtung 20 gemessen) in eine ganzzahlige Zahl einzelner Einheiten aufgeteilt. In Fig. 2 ist dies beispielhaft anhand der mit P gekennzeichneten Periode ausgeführt. Die Periode ist in fünf Einheiten, die mit 1 bis 5 bezeichnet sind, unterteilt. Die gewählte Anzahl der Einheiten ist gleich der Anzahl der benötigten Sperrzähne 30 bis 38.

2. Die Breite einer Einheit ist (mathematisch gesehen) die Breite eines Sperrzahns 30 bis 38 und zugleich die Breite des Abstandes z zwischen zwei Sperrzähnen. In der Praxis wird der Sperrzahn etwas breiter und der Abstand z um dasselbe Maß kleiner gewählt.

3. In einer periodischen Reihenfolge werden nun den Einheiten Sperrzähne 30 bis 38 zugeordnet. Die Reihenfolge wird so gewählt, daß die Abstände z zwischen den Sperrzähnen der Breite der Sperrzähnen b entspricht. Im Ausführungsbeispiel nach Fig. 1 ist der ersten Einheit der Sperrzahn 30 und der dritten Einheit der Sperrzahn 32 zugeordnet. Würde an die Einheiten weiterzählen, wäre der Sperrzahn 34 der Einheit 5 zugeordnet. Wegen der Periode, die fünf Einheiten beträgt, entspricht die siebte Einheit jedoch der zweiten Einheit.

4. Nun ist zu unterscheiden, ob die Periode P in eine geradzahlige Anzahl von Einheiten oder - was vorteilhafter ist - in eine ungeradzahlige Zahl von Einheiten unterteilt wurde. Die Figuren 1 und 2 zeigen Fälle, in denen das Periodenmaß P in eine ungeradzahlige Anzahl von Einheiten unterteilt wurde, in diesem Fall sind die Sperrzähne 30 bis 38 gleichabständig angeordnet. Figur 3 zeigt den Fall, in dem das Periodenmaß P in vier Einheiten unterteilt wurde. Hier muß zwischen dem zweiten Sperrzahn 32 und dem dritten Sperrzahn 34 ein Abstand 2Z gewählt werden, während der Abstand zwischen dem ersten Sperrzahn 30 und dem zweiten Sperrzahn 32 sowie dem dritten Sperrzahn 34 und dem vierten Sperrzahn 36 jeweils z beträgt. Eine geradzahlige Anzahl von Einheiten führt also zu einer nicht gleichförmigen Verteilung der Sperrzähne.

Bei Beachtung dieser Konstruktionsprinzipien erhält man Anordnungen von Feststellvorrichtungen, die - wie die beispielhaften Anordnungen gemäß den Figuren 1 bis 3 - eine schlupffreie Blockierung in einer beliebig gewählten Relativposition zwischen der Rastenschiene 22 und den Sperrzähnen 30 bis 38 ermöglichen. Dies beruht darauf, daß jedem Sperrzahn eine der Einheiten, in die das Periodenmaß P unterteilt wurde, zugeordnet ist. Da die Einheiten abstandlos nebeneinander liegen, ist stets eine Flanke der Sperrzähne so positioniert, daß sie in Anlage an eine Raste 24 gelangen kann. So ist beispielsweise in Figur 3 der erste Sperrzahn 30 in der gezeigten Relativposition derjenige der vier Sperrzähne, der bei Freigabe der Ausrastvorrichtung in Kontakt mit der unmittelbar unter ihm befindlichen Raste kommt und dadurch die Rastenschiene 22 gegen eine Bewegung nach rechts blockiert. Verschiebt man dagegen die Rastenschiene 22 in Figur 3 zwei bis drei Millimeter nach links, so ist es der vierte Sperrzahn 36, der nunmehr die Sperrfunktion übernimmt. Dasselbe läßt sich an den anderen Ausführungsbeispielen nachweisen.

In den Ausführungsbeispielen sind die Sperrzähne 30 bis 38 jeweils in einer Reihe und im Abstand voneinander angeordnet. Hierdurch wird erreicht, daß jeder Sperrzahn einzeln durch eine Führung 28 geführt werden kann. Grundsätzlich ist es auch möglich, die Sperrzähne einzeln zu führen, wenn man sie hintereinander (in der Zeichenebene der Figuren) staffelt. Dann können die Sperrzähne so angeordnet werden, daß sie sich in einer Periode P befinden und jeder Flanke 42 unmittelbar eine Einheit zugeordnet ist. Bei den Darstellungen nach den Figuren 1 bis 3 wirken die Sperrzähne 30 bis 38 dagegen jeweils mit mindestens zwei Perioden P der Rastenschiene 22 zusammen. Durch die oben wiedergegebenen Konstruktionsprinzipien wird jedoch erreicht, daß diejenigen Sperrzähne, die von einem beliebigen Bezugspunkt ein ganzzahliges Vielfaches des Periodenmaßes P entfernt sind, eine Position einnehmen, die in der betrachteten Periode jeweils nur einem Sperrzahn zugeordnet ist. So ist im Ausführungsbeispiel nach Fig. 3 und bei ausschließlicher Betrachtung der nach rechts weisenden Flanken der erste Sperrzahn 30 für die Einheit 1 zuständig, der zweite Sperrzahn 32 ist für die Einheit 5 zuständig, der dritte Sperrzahn ist der Einheit 4 zugeordnet, der vierte Sperrzahn 36 ist der Einheit 3 zugeordnet und schließlich ist der fünfte Sperrzahn 38 der Einheit 2 zugeordnet.

Besonders günstige Konstruktionen ergeben sich dann, wenn entsprechend dem Patentanspruch 2 die lichte Weite der Rastöffnung der Summe aus Breite einer Raste und doppelter Breite eines Sperrzahns angepaßt ist und der lichte Abstand zwischen den Sperrzähnen mit der Summe aus der Breite einer Raste und dem n-fachen (n = 0, 1, 2, 3 ...) Periodenmaß P übereinstimmt. Dann ist sichergestellt, daß immer mindestens einer der Sperrzähne 30 bis 38 zwangsläufig in in eine Rastöffnung 26 eingreift. Dies ist, wie sich anhand der in den Figuren gezeigten Ausführungsbeispiele nachweisen läßt, bei diesen nicht immer der Fall. Die beschriebene Abstimmung und vorzugsweise Weiterbildung führt somit zu einer Sicherheitsrastung, der jeweils völlig durchgreifende Sperrzahn 30 liegt - bei entsprechender konstruktiver Ausbildung - so tief, daß sich seine mindestens eine Flanke 42 unterhalb der Rastenschiene 22 befindet. Dadurch kann er auch bei den höchsten, angreifenden Kräften nicht in die Freigabestellung gedrückt werden.

**Patentansprüche**

1. Feststellvorrichtung für einen einstellbaren Fahrzeugsitz, z. B. für einen Fahrzeugschiebesitz, mit einer parallel zu einer Einstellrichtung (20) verlaufenden Rastenschiene (22), die periodisch im Periodenmaß P angeordnete Rasten (24) und Rastöffnungen (26) aufweist und mit einer dieser zugeordneten Sperreinheit, die mehrere unabhängig voneinander in einer Einrastrichtung (40) bewegbare, in Einrastrichtung elastisch vorbelastete und gemeinsam ausrastbare, jeweils zwei geradlinig verlaufende, seitliche Flanken, die zur Anlage an die Rasten (24) bestimmt sind, aufweisende Sperrzähne (30 bis 38) hat, dadurch gekennzeichnet, daß zumindest eine der beiden seitlichen Flanken (42) in einem spitzen Wirtel zur Einrastrichtung (40) verläuft, wobei der Wirtel einerseits möglichst groß, andererseits aber noch so ausreichend klein gewählt ist, daß der Sperrzahn bei unfallbedingter Belastung des Fahrzeugsitzes in Einstellrichtung (20) nicht selbsttätig aus seiner Rastposition herausgedrückt werden kann, daß die Summe der Projektionen aller in dieselbe Richtung weisenden Flanken (42) auf die Einstellrichtung (20) nicht kleiner ist als das Periodenmaß P, und daß die Sperrzähne (30 bis 38) so über mindestens ein, vorzugsweise zwei Periodenmaße P der Rasten (24) und Rastöffnungen (26) verteilt angeordnet sind, daß jeder in dieselbe Richtung weisenden Flanke (42) eine andere Einheit des Periodenmaßes P zugeordnet ist.

2. Feststellvorrichtung nach Anspruch 1, dadurch gekennzeichnet, daß die lichte Weite einer Rastöffnung (26) der Summe aus Breite einer Raste (24) und doppelter Breite eines Sperrzahns (30, 32 ff) entspricht und der lichte Abstand zwischen den Sperrzähnen (30 bis 38) mit der Summe aus der Breite einer Raste (24) und dem n-fachen (n = 0, 1, 2, 3 ...) Periodenmaß P übereinstimmt.

3. Feststellvorrichtung nach Anspruch 1 oder 2, dadurch gekennzeichnet, daß die Rastzähne (30 bis 38) zwei in unterschiedliche Richtungen weisende, schräg verlaufende Flanken (42) haben.

4. Feststellvorrichtung nach einem der Ansprüche 1 bis 3, dadurch gekennzeichnet, daß die Sperrzähne (30 bis 38) an ihrem freien Ende eine vorzugsweise abgerundete Spitze aufweisen.

5. Feststellvorrichtung nach einem der Ansprüche 1 bis 4, dadurch gekennzeichnet, daß der spitze Winkel der schräg verlaufenden Flanken (42) 5° bis 20°, vorzugsweise 7° bis 15° beträgt und insbesondere bei 14° liegt.

6. Feststellvorrichtung nach einem der Ansprüche 1 bis 5, dadurch gekennzeichnet, daß die Breite der Sperrzähne (30 bis 38) der Breite des Abstandes z zwischen ihnen entspricht.

7. Feststellvorrichtung nach einem der Ansprüche 1 bis 6, dadurch gekennzeichnet, daß die Sperrzähne (30 bis 38) einzeln in Führungen (28) geführt sind, in denen sie im wesentlichen nur in Einrastrichtung bzw. in Gegenrichtung dazu bewegbar sind.

8. Feststellvorrichtung nach einem der Ansprüche 1 bis 7, dadurch gekennzeichnet, daß das Periodenmaß P möglichst klein gewählt ist.

9. Feststellvorrichtung nach einem der Ansprüche 1 bis 8, dadurch gekennzeichnet, daß die Breite der Sperrzähne (30 bis 38) dem Periodenmaß P geteilt durch eine ganze Zahl entspricht.

10. Feststellvorrichtung nach einem der Ansprüche 1 bis 9, dadurch gekennzeichnet, daß das Periodenmaß P in (2n minus 1) Einheiten (1 bis 5) unterteilt wird, wobei n ganzzahlig ist, daß den Einheiten (1 - 5) in einer bestimmten Reihenfolge, bei Sperrzähnen (30 - 38) mit nur einer Flanke (42) der ersten, dritten, fünften usw. Einheit ein Sperrzahn (30 bis 38) zugeordnet wird, dessen Flanke die Breite der Einheit (1 bis 5) hat und daß insgesamt (2n minus 1) Sperrzähne (30 bis 38) vorgesehen sind.

**Claims**

1. Fixing device for an adjustable vehicle seat, e.g. for a sliding vehicle seat, with a notched rail (22) running parallel to a direction of adjustment (20), said notched rail exhibiting notches (24) and notch openings (26) periodically arranged in the period dimension P, and with a blocking unit allocated to these which has several lateral flanks which run in a straight line two at a time, which are movable independently of one other in one direction of engagement (40), are elastically pre-stressed in the direction of engagement and jointly unlockable, and which are intended for contact with the notches (24), has ratchets (30 to 38) which point upwards, **characterized in that** at least one of the two lateral flanks (42) runs at an acute angle to the direction of locking (40), the angle selected on one side being as large as possible, but on the other side sufficiently small for it to be impossible for the ratchet to be pressed out of its catch position automatically when the vehicle seat is subjected to a load occasioned by an accident in the direction of adjustment (20), the total of projections of all flanks (42) pointing in the same direction on the direction of adjustment (20) is no smaller than the period dimension P, and the ratchets (30 to 38) are distributed over at least one, preferably two, period dimensions P of the notches (24) and notch openings (26) in such a way that each flank (42) pointing in the same direction is allocated another unit of the period dimension.

2. Fixing device according to claim 1, **characterized in that** the clear width of a notch opening (26) corresponds with the sum of the width of one notch (24) and double the width of one ratchet (30, 32 and the following) and the clear spacing between the ratchets (30 to 38) is the same as the sum of the width of one notch (24) and n-times (n = 0, 1, 2, 3 ...) the period dimension P.

3. Fixing device according to claim 1 or 2, **characterized in that** the ratchets (30 to 38) have two flanks (42) pointing in different directions and running diagonally.

4. Fixing device according to one of the claims 1 to 3, **characterized in that** the ratchets (30 to 38) have a preferably rounded tip at their free end.

5. Fixing device according to one of the claims 1 to 4, **characterized in that** the acute angle of the diagonally running flanks (42) is 5° to 20°, preferably 7° to 15° and especially 14°.

6. Fixing device according to one of the claims 1 to 5, **characterized in that** the width of the ratchets (30 to 38) corresponds with the width of the spacing z between them.

7. Fixing device according to one of the claims 1 to 6, **characterized in that** the ratchets (30 to 38) are guided individually in guide mechanisms (28) in which they can essentially only be moved in the direction of locking or in the opposite direction thereto.

8. Fixing device according to one of the claims 1 to 7, **chacterized in that** the period dimension P is selected as small as possible.

9. Fixing device according to one of the claims 1 to 8, **characterized in that** the width of the ratchets (30 to 38) corresponds with the period dimension P divided by an integer.

10. Fixing device according to one of the claims 1 to 9, **characterized in that** the period dimension P is divided into (2n minus 1) units (1 to 5), where n is an integer, and one ratchet (30 to 38) is allocated to the units (1 - 5) in a specific sequence, in the case of ratchets (30 - 38) with only one flank (42) to the first, third, fifth etc. unit, the said ratchet having a flank with the width of the unit (1 to 5), and in total (2n minus 1) ratchets (30 to 38) being provided.

**Revendications**

1. Dispositif de fixation pour un siège réglable de véhicule, par exemple pour un siège coulissant de véhicule, comportant un rail d'encliquetage (22) qui est parallèle à une direction de réglage (20) et possède des organes d'encliquetage (24) et des ouvertures d'encliquetage (26), qui sont disposés périodiquement avec un pas de répartition P, et une unité de blocage associée à ce rail et qui possède plusieurs dents de blocage (30 à 38), qui sont déplaçables indépendamment les unes des autres dans un dispositif d'encliquetage (40), sont précontraintes élastiquement dans la direction d'encliquetage et peuvent être désencliquetées en commun et comportent respectivement deux flancs latéraux rectilignes, qui sont destinés à s'appliquer contre les organes d'encliquetage (24), caractérisé en ce qu'au moins l'un des deux flancs latéraux (42) fait un angle aigu par rapport à la direction d'encliquetage (40), l'angle étant choisi d'une part aussi grand que possible, mais d'autre part aussi faible que possible afin que, dans le cas où une charge est appliquée, lors d'un accident, au siège du véhicule dans la direction de réglage (20), la dent de blocage ne puisse pas être dégagée automatiquement de sa position d'encliquetage, que la somme des projections de tous les flancs (42) tournés dans la même direction, sur la direction de réglage (20) n'est pas inférieure au pas de répartition P, et que les dents de blocage (30 à 38) sont disposées sur au moins un et de préférence deux pas de répartition P des organes d'encliquetage (24) et des ouvertures d'encliquetage (26), de sorte qu'à chaque flanc (42) dirigé dans la même direction, est associée une autre unité du pas de répartition P.

2. Dispositif de fixation selon la revendication 1, caractérisé en ce que la largeur de passage libre d'une ouverture d'encliquetage (26) correspond à la somme de la largeur d'un organe d'encliquetage (24) et du double de la largeur d'une dent de blocage (30,32 et suivantes) et que la distance libre entre les dents de blocage (30 à 38) est égale à la somme de la largeur d'un organe d'encliquetage (24) et d'un multiple n (n = 0, 1, 2, 3 ...) du pas de répartition P.

3. Dispositif de fixation selon la revendication 1 ou 2, caractérisé en ce que les dents d'encliquetage (30 à 38) possèdent deux flancs (42) qui s'étendent obliquement dans des directions différentes .

4. Dispositif de fixation selon l'une des revendications 1 à 3, caractérisé en ce que les dents de blocage (30 à 38) possèdent, sur leur extrémité libre, une pointe de préférence arrondie.

5. Dispositif de fixation selon l'une des revendications 1 à 4, caractérisé en ce que l'angle aigu des flancs obliques (42) est compris entre 5° et 20° et de préférence entre 7° à 15° et est égal notamment à 14°.

6. Dispositif de fixation selon l'une des revendications 1 à 5, caractérisé en ce que la largeur des dents de blocage (30 à 38) correspond à la largeur de la distance (z) entre ces dents.

7. Dispositif de fixation suivant l'une des revendications 1 à 8, caractérisé par le fait que les dents de blocage (30 à 38) sont guidées individuellement dans des guides (28), dans lesquelles elles sont déplaçables essentiellement uniquement dans la direction d'encliquetage ou en sens opposé.

8. Dispositif de fixation suivant l'une des revendications 1 à 7, caractérisé en ce que le pas de répartition P est choisi aussi petit que possible.

9. Dispositif de fixation selon l'une des revendications 1 à 8, caractérisé en ce que la largeur des dents de blocage (30 à 38) correspond au pas de répartition P divisé par un nombre entier.

10. Dispositif de fixation selon l'une des revendications 1 à 9, caractérisé en ce que le pas de répartition P est subdivisé en (2n moins 1) unités (1 à 5), n étant un nombre entier, aux unités (1-5) est associée, selon une séquence déterminée, dans le cas des dents de blocage (30-38) possédant un seul flanc (42) de la première, troisième, etc. unités, une dent de blocage (30 à 38) dont le flanc possède la largeur de l'unité (1 à 5) et qu'il est prévu au total (2n moins 1) dents de blocage (30 à 38).

# FIG. 1

# FIG. 2

# FIG. 3